# EUROPEAN PATENT APPLICATION

(11) **EP 2 806 363 A2**
(43) Date of publication of application: **26.11.2014**
(21) Application number: 14169162.6
(22) Date of filing: 20.05.2014
(51) Int. Cl.: G06F 17/22, G06F 17/27

(54) **Data conversion and search systems**

(30) Priority: 21.05.2013 GB 201309150
(71) Applicant: RWS Group Limited, Buckinghamshire SL9 9FG (GB)
(72) Inventor: Price, Alan Peter, Chalfont St Peter, Buckinghamshire SL9 9FG (GB)
(74) Representative: Martin, Philip John

(57) **Abstract**

We describe a system for converting a plurality of collections of data to a structured searchable format, the system comprising: a set of data feeds, one from each of a plurality of data collection sources; temporary data storage coupled to said data feeds to store data from said collection sources for format-conversion processing; non-volatile storage storing processor control code for said format converting; a database storing a data format conversion table comprising format data and data in said structured searchable format; and a processor coupled to said non-volatile storage, to said database, to said temporary data storage, and to said non-volatile storage storing said code; wherein said code is configured to control said processor to: input a collection data item from a said data collection source; identify, within said data item, a set of fields defining: i) an identification number of said data item; ii) a type identification of said data item; and iii) at least one date for said data item; request, from said data format conversion table, format data defining potential formats for said collection data item, selected responsive to a content of a said field defining said identification number of said data item, said type identification of said data item, and said at least one date for said data item; determine a subset of said potential formats by testing a format of said identification number of said data item in said collection data item for compatibility with a format defined by each of said potential formats defined by said format data; and then for each format of said subset of potential formats: process an alphanumeric string in said collection data item comprising said identification number of said data item to attempt to extract from said string at least said identification number of said data item, a date defined by a year, and one or more alphabetical prefix or suffix letter to provide extracted item data, and test whether said identification number of said data item, said date defined by a year and said one or more alphabetical prefix or suffix letters are correctly extracted from said string, wherein said test of said correct extraction includes at least matching data in said extracted item data to fields in an output data format defining said structured, searchable format to determine whether a correct match is made; until a said correct match is found; and then assign said data in said extracted item data to said fields in said output data format defining said structured, searchable format; and store said extracted data from said collection data item in said database in said structured searchable format.

## Description

### FIELD OF THE INVENTION

This invention relates to patent search systems and more particularly to systems, methods and computer program code for processing and converting between data formats for such systems.

### BACKGROUND TO THE INVENTION

The data corpus of a large patent search system undergoes daily additions, updates and deletions in response to global data feeds. These data feeds comprise, inter alia, feeds from public domain data made available by patent offices throughout the world. The formats of these data feeds are mutually incompatible and vary over time. The formatting can be complex and date-dependent but it is nonetheless crucial to extract consistent and accurate data from the available data feeds. This is further complicated by the very large number of different formats which need to be handled - for example the applicant has identified more than 1500 different formats for patent publication data from around the world.

There is a significant problem in finding an efficient, accurate and flexible technique for resolving the differences between the various data types and methods employed when handling patent publication numbers around the world, standardising these, and entering the standardising data into a database for subsequent search or other processing.

### SUMMARY OF THE INVENTION

According to the present invention there is therefore provided a system for converting a plurality of collections of data to a structured searchable format, the system comprising: a set of data feeds, one from each of a plurality of data collection sources; temporary data storage coupled to said data feeds to store data from said collection sources for format-conversion processing; non-volatile storage storing processor control code for said format converting; a database storing a data format conversion table comprising format data and data in said structured searchable format; and a processor coupled to said non-volatile storage, to said database, to said temporary data storage, and to said non-volatile storage storing said code; wherein said code is configured to control said processor to: input a collection data item from a said data collection source; identify, within said data item, a set of fields defining: i) an identification number of said data item; ii) a type identification of said data item; and iii) at least one date for said data item; request, from said data format conversion table, format data defining potential formats for said collection data item, selected responsive to a content of a said field defining said identification number of said data item, said type identification of said data item, and said at least one date for said data item; determine a subset of said potential formats by testing a format of said identification number of said data item in said collection data item for compatibility with a format defined by each of said potential formats defined by said format data; and then for each format of said subset of potential formats: process an alphanumeric string in said collection data item comprising said identification number of said data item to attempt to extract from said string at least said identification number of said data item, a date defined by a year, and one or more alphabetical prefix or suffix letter to provide extracted item data, and test whether said identification number of said data item, said date defined by a year and said one or more alphabetical prefix or suffix letters are correctly extracted from said string, wherein said test of said correct extraction includes at least matching data in said extracted item data to fields in an output data format defining said structured, searchable format to determine whether a correct match is made; until a said correct match is found; and then assign said data in said extracted item data to said fields in said output data format defining said structured, searchable format; and store said extracted data from said collection data item in said database in said structured searchable format.

Broadly speaking in embodiments potential formats are identified based on information from the collection data item and each of these is then tested to identify the actual format employed. It might be thought that it would be necessary to extract an identification (publication) number from the data in order to perform the initial selection of potential formats, but the inventors have appreciated that the initial selection may simply be performed on the basis of a string (of integers) within the field without needing to know the format to extract the number (the format not being known at this point).

In preferred embodiments the collection data item comprises an item of patent publication data relating to a published patent document and thus the field comprising the identification number of the data item comprises the publication number field of the data. In this case the identification number is the patent publication number, the type identifier of the data item is the patent kind code, and the date used for the initial screening is the application date or publication date for the patent document-preferably both are used to extract potential formats. The various data collection sources comprise patent offices around the world.

Then the data format conversion table comprises a plurality of rows each row comprising a country code field storing a country code for the document, an input format data field storing format data defining a possible input format of the publication number, an input kind code, preferably an example of a publication number having the possible input format, an output format data field comprising format data defining an output format for the publication number corresponding to the input format in the row, preferably an example of a publication number in the output format, an output kind code corresponding to the input kind code, and then data for initial screening of the possible input formats. This latter data comprises a range identifier field defining, for the row, one of the application date, publication date, and patent publication number to which a range applies, a 'from' range field defiling a from-value for the range, and a 'to' range field defining a to-value for the range. In the case of a patent publication number this is not a from-to range for the publication number per se but a from-to range for the string of integers in the patent publication number field. The system comprises code to extract the format data defining possible formats for the patent publication data by determining whether (for each row) the application date, publication date, or data within the patent publication number field lies within the defined from-to range (after stripping out country code data from the publication number field - there are multiple rows per country code). As previously described this is performed without determining a format of the publication number or extracting a publication number per se from the publication number field.

In embodiments the kind code is always needed but where one of the publication date, application date, and publication number field data is missing for the initial pass then an error may be flagged for rows requiring that data. Then the formats in those rows may either be included or excluded from the set of possible formats for the second pass. In embodiments each entry relating a possible input format to a defined output format comprises a pair of rows in the table, a first row as previously described and a second row defining a from-to range for the data in the data base for conversion back to the input format, thus facilitating bi-directional conversion. In some preferred embodiments the format data in the format conversion table is in human-readable format, in particular as specified later and a user interface is provided to enable users without a knowledge of programming to define new input and output formats. In preferred embodiments the system also includes a self-test/validate function to operate on the stored examples in the table; stored examples in the table facilitates an independent check of the format conversion definitions. In embodiments the system includes a code module to determine a Gregorian calendar date for a data item with a JP country code having an input format which matches that for a publication number defined by a year of an Emperor's reign.

In preferred embodiments the data format conversion table includes at least the table extracts given later in this specification. Preferably the table further comprises, for each row, coverage fields defining a range of validity of the data stored in the data base defining, for each format, the coverage (contents) of the data base.

The invention also provides a patent search system in combination with the format conversion systems defined above and including user terminals to query/output from the data base in either or both of the input (source) formats and the structured, stored database format.

### BRIEF DESCRIPTION OF THE DRAWINGS

These and other aspects of the invention will now be further described, by way of example only, with reference to the accompanying figures in which:
Figure 1 shows an embodiment of a search system incorporating a data format conversion system according to an embodiment of the invention; and
Figure 2 shows a flow-diagram of a data conversion procedure according to an embodiment of the invention.

### DETAILED DESCRIPTION OF PREFERRED EMBODIMENTS

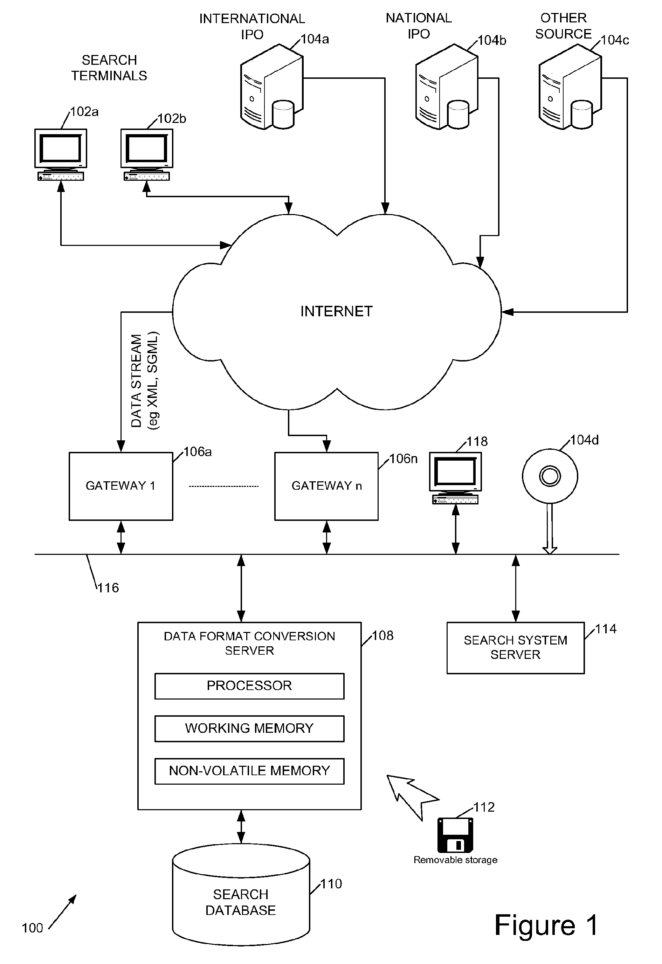

Referring to Figure 1 this shows a patent search system 100 comprising a set of user search terminals 102 a-b coupled by the Internet to a search system server 114 which provides user interface to allow a user to search database 110. An internal network 116 connects the search system 114 with database 110 and a set of gateways 106 a-n which receive patent publication data, in XML, SGML and other formats, from around the world. Data is also received from non-internet based sources such as DVD-ROM 104d. Data is supplied from national and international Intellectual Property Offices and other sources, illustratively in Figure 1 entities 104a-c. A data format conversion server 108 couples database 110 to network 116 and provides bi-directional data conversion between input data formats from the various patent offices and a set of data formats employed by database 110 (which in embodiments has an SQL interface) which together comprise a structured, searchable format. The data format conversion server comprises a processor, working memory, and non-volatile memory storing a database search and data format conversion code; database 110 stores, as well as patent data, a large data format conversion table as described in more detail later. It will be appreciated, for example, that even within a single organisation historical and other reasons can lead to the same document having different publication number formats in different contexts. To take a straightforward example, an Australian publication supplied by INPADOC might have a publication number AU200051563 with kind code A whereas the same publication supplied via DOCDB would have the publication number AU5156300 with kind code A5. In practice there are many thousands of different formats employed by patent offices around the world and any single document source typically has between 10 and 50 different formats.

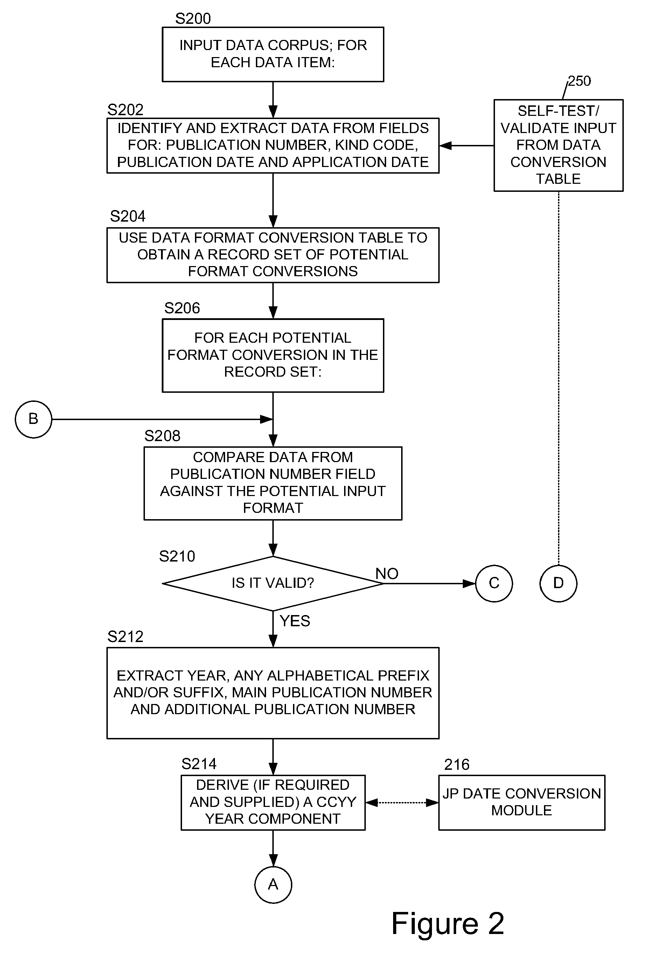

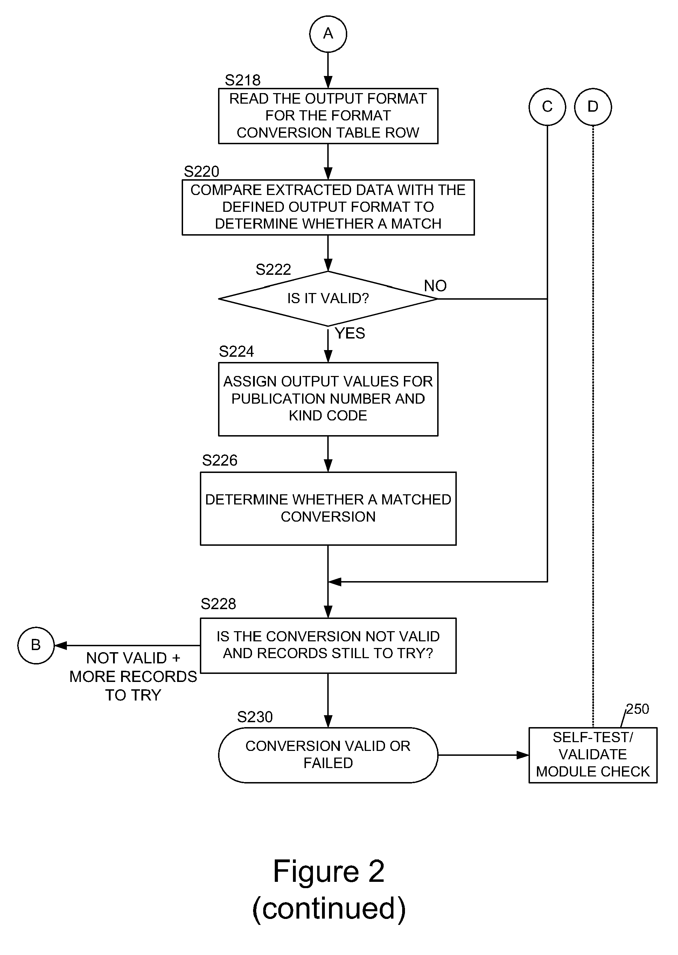

We will describe a data format conversion system which employs two main structures, a database table comprising input and output formats in human readable form, and code that performs the conversion. This approach facilitates addition to and modification of the conversions without modification of the underlying software, for example via an interface on system configuration terminal 118 of Figure 1 which allows editing of the data format conversion table stored in the database. Test examples are integrated into the table to ensure the validity of the format conversion process. Referring next to Figure 2, this shows a flow-diagram of a data format conversion procedure implemented by server 108 of Figure 1. Thus at step S200 the procedure inputs a data corpus and then, for each data item to be processed, identifies and extracts data from fields comprising the publication number, kind code, publication date, and application date of a document item (S202).

The procedure then performs a search of the data format conversion table to obtain a set of potential format conversions (S204). Where an element, for example a publication date, is missing then if the format is not dependent on this element (for example, not publication date - dependent (the search returns a valid result; otherwise an error is flagged. In general, for each row of the table/input-output format adjust one of the application date (AD), publication date (PD) or publication number (PN) is needed to identify a row since in general the relevant ranges do not intersect - but this is not a requirement and overlapping ranges could be handled, for example, by multiple entries with different AD/PD/PN dependencies. At this stage in the procedure the publication number has not yet been decoded from the publication number field. To address this the numeric string in the publication field is employed for the 'publication number' range (after stripping off the country code). Thus a result of step S204 is a set of all potential formats that are within the parameters specified by the kind code, 'publication number', publication date and application date of the document. Each of these potential formats is then tested (S206 onward) to determine whether or not there is a true match to a format in the conversion table.

In embodiments the structure of the data format conversion table follows the example below:

### Example table structure

| **CC** | **XPN** | **XKD** | **XExample** | **YPN** | **YKD** | **YExample** | **AD PD PN** | **From** | **To** |
|---|---|---|---|---|---|---|---|---|---|
| AU | Ccyy1n(5) | A5 | AU2005100397 | Ccyy1n(5) | AE | AU2005100397 | AD | 20000101 | - |
| AU | n(5)yy | A | AU5156300 | ccyyn(5) | A5 | AU200051563 | AD | 20000101 | |
| AU | n(5)yy | A | AU4257797 | ccyyn(5) | A1 | AU199742577 | AD | 19700101 | 19991231 |
| AU | ccyyn(6) | A0 | AU2000001875 | lln(1-4)yy | D0 | AUPR187500 | AD | 20000101 | - |
| FR | n(1-7) | A | FR105205 | n(1-7) | A | FR105205 | PN | 1 | 1999999 |
| FR | n(7+) | A | FR2684466 | n(7+) | A1 | FR2684466 | PN | 2000000 | |

### KEY

| **Colum** | **Description** |
|---|---|
| CC | Two character country code |
| XPN | Publication number format from input source X |
| XKD | Publication kind code from input source X |
| XExample | Example publication number from input source X |
| YPN | Output/database publication number format (source Y) |
| YKD | Output/database publication kind code (source Y) |
| YExample | Output/database example publication number (source Y) |
| AD PD PN | Identifies whether the range is based on application number, publication date or publication number |
| From | Publication or application date or publication number field data at start of range |
| To | Publication or application date or publication number field data at end of range |

The publication number data format is defined using the elements in the table below.

| **Element** | **Description** |
|---|---|
| n(i) | Main part of the publication number comprising i numeric characters |
| n(i-j) | Main part of the publication number comprising i-j numeric characters |
| ccyy | Four character date (for example 1997 or 2013) |
| yy | Two digit date (for example 97 or 13) |
| I | One alphabetical character |
| II | Two alphabetical characters |
| S | Any capital letter = literal letter (in this example, 'S') |
| 1 | Numeric literal 1 |
| 0 | Numeric literal 0 |
| j(i) | Additional i numeric characters, either prefixing or post fixing the main number |

This example structure is simplified - in embodiments there may be more than one set of the three columns beginning 'X' (from source X), and additional columns providing fields for each row for defining a coverage of database 110 for each row/format, that is whether or the degree to which the database stores data in that format. Also, in embodiments, there are two sets of from-and to-value columns, 1 containing integer data, and a second pair of columns containing string data, for convenience in processing (the contents of the publication number field, excluding the country code, need not then be restricted to numeric data).

Returning to the flow-diagram of Figure 2, at step S208 the procedure compares data from the publication number field against the potential input format for the first/next row of the table defining a potential format conversion. Depending upon whether there is a match to the format the procedure either continues (S212) or jumps to step S228 which determines whether there are any records still to try and if so loops back to step S208.

If the publication number field format matches the defined format then at step S212 the procedure extracts the year, any alphabetical prefix/suffix, the publication number, and any additional numbers. Then, if not present in the incoming data short 2-and 4-digit dates are derived (S214). In broad terms this information may be determined from data within the publication number field. For example the system includes a Japanese date conversion software module 216 which interacts with the code at step S214 to convert a date of Emperor's reign to a Gregorian calendar date based on a (literal) letter in the publication number field identifying the relevant Emperor. For example the reign of Emperor Hirohito (1926-1989) is denoted by 'S' and has (in one example row) a format Sj(2)5n(5) and that of Emperor Akihito (1989-date) has (in one example row), the format H0j(1)n(3). At step S218 the procedure continues, reading the output format for the format conversion table row and comparing the extracted with the defined output format to determine whether there is a match (S220; S222). If the required elements have not been extracted or are incorrect for this format then the procedure loops to step S228 and the next potential match (if any) is checked. However if all the required elements are present and match the target format requirements then the output publication number and kind code are assigned (S224) and the data is stored in database 110. The procedure checks whether a valid, matched conversion was achieved (S226) and if not looped back (S228) as previously described until either correct output format data, including the publication number, is generated, or until no more potential matches are available (S230).

A self-test module 250 operates on the example data stored within the data format conversion table to check and validate the defined format conversions based on the known good examples. In embodiments the self-testing module ignores rows where no examples are present (there is 'none' in the example fields).

An extract of actual data from the data format conversion table is shown in the table extract below:

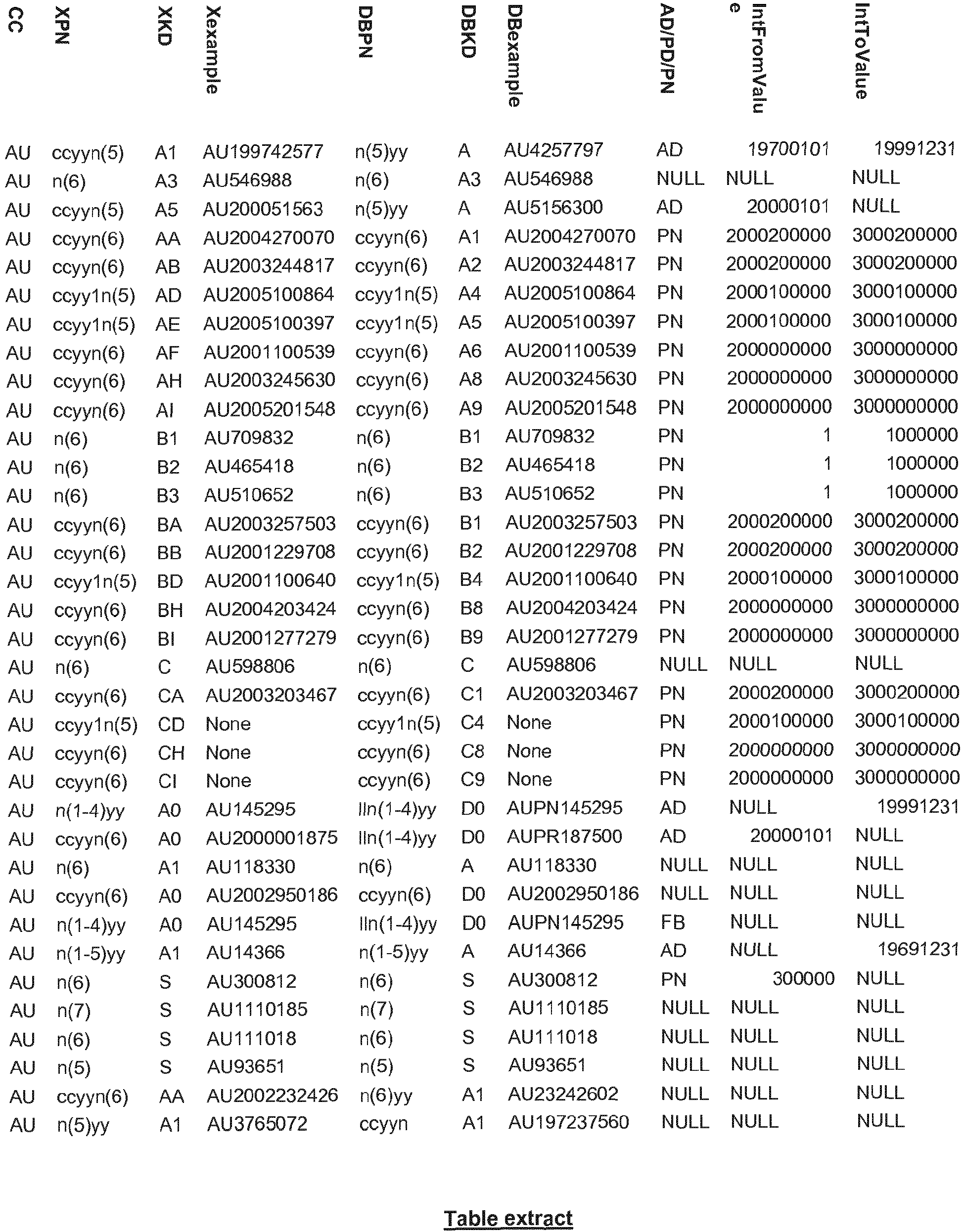

In embodiments the system is able to perform bi-directional data format conversion and in this case each input/output format entry is provided with a pair of rows, one with a definition of the input format range, a second with a definition of the output (database) format range. For the reverse conversion a procedure first identifies and extracts a record set of potential conversions in a similar manner to that previously described with reference to Figure 2, and then applies a selected conversion to the data from the database in order to convert back to the input format data.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A system for converting a plurality of collections of data to a structured searchable format, the system comprising:
a set of data feeds, one from each of a plurality of data collection sources;
temporary data storage coupled to said data feeds to store data from said collection sources for format-conversion processing;
non-volatile storage storing processor control code for said format converting;
a database storing a data format conversion table comprising format data and data in said structured searchable format; and
a processor coupled to said non-volatile storage, to said database, to said temporary data storage, and to said non-volatile storage storing said code; wherein said code is configured to control said processor to:
input a collection data item from a said data collection source;
identify, within said data item, a set of fields defining: i) an identification number of said data item; ii) a type identification of said data item; and iii) at least one date for said data item;
request, from said data format conversion table, format data defining potential formats for said collection data item, selected responsive to a content of a said field defining said identification number of said data item, said type identification of said data item, and said at least one date for said data item;
determine a subset of said potential formats by testing a format of said identification number of said data item in said collection data item for compatibility with a format defined by each of said potential formats defined by said format data; and
then for each format of said subset of potential formats:
process an alphanumeric string in said collection data item comprising said identification number of said data item to attempt to extract from said string at least said identification number of said data item, a date defined by a year, and one or more alphabetical prefix or suffix letter to provide extracted item data, and
test whether said identification number of said data item, said date defined by a year and said one or more alphabetical prefix or suffix letters are correctly extracted from said string, wherein said test of said correct extraction includes at least matching data in said extracted item data to fields in an output data format defining said structured, searchable format to determine whether a correct match is made;
until a said correct match is found; and
then assign said data in said extracted item data to said fields in said output data format defining said structured, searchable format; and
store said extracted data from said collection data item in said database in said structured searchable format.

2. A system as claimed in claim 1 wherein a said collection data item comprises an item of patent publication data relating to a published patent document, wherein said field defining said identification number of said data item comprises a publication number field of said item of patent publication data, wherein said type identification of said data item comprises a kind code for said patent document, and wherein said at least one date for said data item comprises both an application date and a publication date for said patent document;
wherein said data format conversion table comprises a plurality of rows wherein a said row comprises a country code field storing a country code for said patent publication number, an input format data field comprising format data defining a potential input format of said patent publication number in said publication number field, an input kind code, an example of a patent publication number for said item of patent publication data having said input format, an output format data field comprising format data defining an output format for said patent publication number corresponding to said input format in the row, an output kind code corresponding to said input kind code, an example of said patent publication number having said output format, a range identifier field defining for the row, a field for one of said application date, said publication date and said patent publication number to which a range applies, a from range field defining a from value for said range and a to range field defining a to value for said range; wherein said data format conversion table comprises a plurality of rows for a said country code storing a plurality of said input formats for the country code;
the system further comprising code to extract said format data defining potential formats for said collection data item by determining whether said application date field, publication date field or patent publication number field identified by said range identifier field contains data which lies within a range defined by said from and to range fields, where for said patent publication number, said from value and said to value comprise values representing the entirety of said publication number of field apart from any said country code value and wherein, for said patent publication number, said determining whether said publication number lies within said range is performed without determining a format of said publication number.

3. A system as determined in claim 2 wherein said code further comprises code to flag an error if said kind code is missing or if any of said patent publication number, said application date and said publication date is missing and the missing said patent publication number, application date and/or publication date is identified by said range identifier field.

4. A system as claimed in claim 2 or 3 wherein an entry in said data format conversion table relating a said input format to said defined output format comprises a pair of said rows, wherein each row of said pair of rows comprises a second said from-range field defining a second said from-value, and a second said to-range field defining a second said to-value, wherein said second from- and to-values define format conversion ranges for converting from said structured searchable format to a format of said data feed, wherein said code further comprises code to read data from said database in said structured searchable format, identify a row of said data format conversion table responsive to a publication number of said read data, and convert said structured searchable format to said input format for said data feed defined by said identified row.

5. A system as claimed in claim 2, 3 or 4 further comprising a user interface to enable user-definition of said input format in said data format conversion table, wherein said format data in said data format conversion table comprises human-readable format data comprising format-defining elements including:
n(i) defining a main publication number part having i numeric characters;
n(i-j) defining a main publication number part having i to j numeric characters; ccyy defining a four digit date;
yy defining a two digit date;
II defining two alphabetical characters;
1 defining a numeric literal 1;
0 defining a numeric literal 0; and
j(i) defining an additional i numeric characters prefixing or postfixing said main publication number part.

6. A system as claimed in claim 2, 3, 4 or 5 wherein said code further comprises code to self - test/validate said format conversion using said examples of said patent publication number for said item of patent publication data in said input format and output format stored in said data format conversion table.

7. A system as claimed in any one of claims 2 to 6 wherein said code further comprises code to process data from said publication number field in an identified, matched said input format with an associated JP country code to determine a Gregorian calendar date for said structured searchable format from a date defined by a year of Emperor's reign and a code identifying the Emperor.

8. A system as claimed in any preceding claim where said data format conversion table includes at least the rows of the table extract defined in the specification.

9. A system as claimed in any preceding claim wherein said data format conversion table further comprises, for each said row, coverage fields defining a range of validity of the data stored in said database in said structured searchable format.

10. A patent search system comprising a conversion system as recited in any preceding claim in combination with a plurality of user interface terminals coupled to said conversion system in a network, wherein a said user interface terminal is configured to receive a query defining a search space for said database, to transmit a version of said query to said conversion system, to receive results of said query back from said conversion system, and to display said results; wherein said results are in one or both of said input format for said results and said structured searchable format, and wherein said data conversion system is configured to receive a said query from said user terminal, to process said query using said database to generate a set of results for said query in one or both of said input format and said structured searchable format, and to return said results to said user terminal for display.
